# EUROPÄISCHE PATENTSCHRIFT

(11) **EP 1 867 900 B1**
(45) Veröffentlichungstag und Bekanntmachung des Hinweises auf die Patenterteilung: **15.07.2009**
(21) Anmeldenummer: 07108358.8
(22) Anmeldetag: 16.05.2007
(51) Int. Cl.: F16J 3/02, F16L 55/053, F16L 55/054

(54) **Trennelement**
Separating element
Elément de séparation

(30) Priorität: 16.06.2006 DE 102006027724
(43) Veröffentlichungstag der Anmeldung: 19.12.2007
(73) Patentinhaber: ProMinent Dosiertechnik GmbH, 69123 Heidelberg (DE)
(72) Erfinder: Freissler, Bernd, 69234 Dielheim (DE); Bubb, Alexander, 68723 Plankstadt (DE)
(74) Vertreter: Seiffert, Klaus

(56) Entgegenhaltungen:
- EP-A- 0 321 338
- US-A- 3 131 638
- US-A1- 2005 115 402

## Beschreibung

Die vorliegende Erfindung betrifft ein Trennelement für ein Druckausgleichgefäß, einen Druckspeicher oder einen Pulsationsdämpfer, insbesondere ein Sicherheits-Trennelement für derartige Vorrichtungen, welches Mittel zum Erkennen und Anzeigen einer Bruchstelle in einem solchen Trennelement aufweist.

Druckausgleichgefäße, Druckspeicher und Pulsationsdämpfer werden beispielsweise in Rohrleitungssystemen und hydraulischen Kreisläufen eingesetzt, um darin Druck- bzw. Volumenschwankungen auszugleichen und/oder zu dämpfen. Druckausgleichgefäße, Druckspeicher und Pulsationsdämpfer bestehen üblicherweise aus einem Gehäuse, in dem zwei Räume bzw. Kammern durch ein flexibles Trennelement fluiddicht (d. h. flüssigkeits- und gasdicht) voneinander getrennt sind. Eine der beiden Kammern ist mit dem Leitungssystem verbunden und mit der in dem Leitungssystem strömenden Flüssigkeit (oder einem in dem Leitungssystem strömenden Gas) gefüllt. Die zweite Kammer enthält üblicherweise ein Gas, das komprimierbar ist und Druck- bzw. Volumenschwankungen in der ersten Kammer über das flexible Trennelement aufnehmen kann. Das Trennelement zwischen den beiden Kammern eines Druckausgleichgefäßes, des Druckspeichers oder eines Pulsationsdämpfers dient zum einen der Übertragung von Druck- bzw. Volumenschwankungen und zum anderen zur Trennung der unterschiedlichen Medien in den Kammern.

Die für Druckausgleichgefäße, Druckspeicher und Pulsationsdämpfer bekannten Trennelemente bestehen üblicherweise aus einem flexiblen, fluiddichten Membranmaterial, wie beispielsweise verschiedenen Elastomeren, PTFE, usw., und sie können ein oder mehrlagig sein. Die bekannten Trennelemente haben jedoch alle den gemeinsamen Nachteil, daß es bei einem Defekt, z. B. wenn das flexible Membranmaterial reißt, zu einer Vermischung der Medien aus der ersten und der zweiten Kammer kommt und so die sichere Funktionsweise des Druckausgleichgefäßes, des Druckspeichers oder des Pulsationsdämpfers gefährdet ist. Ein solcher Defekt am Druckausgleichgefäß, am Druckspeicher oder am Pulsationsdämpfer wird üblicherweise über die Messung von Druckschwankungen in dem Leitungssystem oder in der mit Gas gefüllten zweiten Kammer festgestellt. Dies bedeutet jedoch, daß ein Defekt erst dann festgestellt wird, wenn die fluiddichte Trennung zwischen der ersten Kammer und der zweiten Kammer nicht mehr gewährleistet ist und Medium aus der einen Kammer in die andere Kammer übergetreten ist und sich die Medien vermischt haben. Die Funktion des Trennelements ist somit zum Zeitpunkt der Feststellung eines Defekts bereits nicht mehr gegeben.

Die US-A-3,131,638 beschreibt eine Membranpumpe mit einer Sicherheitsmembran, bestehend aus drei übereinander angeordneten Membranlagen, die zwischen zwei Pumpengehäusehälften eingespannt sind und wobei sich ein Abschnitt der Membranlagen aus dem Pumpengehäuse heraus erstreckt. Die mittlere der drei Membranlagen ist mit Schlitzen versehen, die zwischen den beiden äußeren Membranlagen eine Kanalstruktur bilden, in der alle Kanäle miteinander verbunden sind und bei der ein Kanal aus dem Pumpengehäuse herausführt. Die Pumpe dient der Beförderung von Flüssigkeit, und die Auslenkung der Membran erfolgt auf der gegenüberliegenden Seite der zu befördernden Flüssigkeit ebenfalls mittels einer pulsierenden Flüssigkeit. Bei einem Bruch einer der beiden äußeren Membranen kann Flüssigkeit in das von der mittleren Membran gebildete Kanalsystem eindringen und durch den aus dem Pumpengehäuse herausführenden Kanal entweichen, wo das Austreten von Flüssigkeit als ein Signal für einen Membranbruch festgestellt werden kann.

Die Aufgabe der vorliegenden Erfindung besteht darin, ein Trennelement für ein Druckausgleichgefäß, einen Druckspeicher oder einen Pulsationsdämpfer bereitzustellen, das die Feststellung eines Defekts bereits zu einem frühen Zeitpunkt erlaubt, zu dem die Funktion des Trennelements noch nicht beeinträchtigt und somit ein rechtzeitiger Austausch möglich ist.

Gelöst wird diese Aufgabe durch ein Trennelement für ein Druckausgleichgefäß, einen Druckspeicher oder einen Pulsationsdämpfer, wobei das Trennelement einen mehrlagigen Aufbau besitzt mit wenigstens zwei übereinander angeordneten flexiblen, fluiddichten Materiallagen und wenigstens einem Distanzelement, welches zwischen den flexiblen, fluiddichten Materiallagen angeordnet ist und diese in einem Abstand zueinander hält, wobei das wenigstens eine Distanzelement so ausgebildet ist, daß der Raum zwischen den flexiblen, fluiddichten Materiallagen wenigstens bereichsweise für Fluid durchströmbar ist, und wobei das Trennelement an einem Randbereich des mehrlagigen Aufbaus einen Sensorbereich aufweist, der mit dem verbleibenden Raum zwischen den flexiblen, fluiddichten Materiallagen in einer für Fluid durchströmbaren Verbindung steht, und der Sensorbereich so ausgebildet ist, daß bei einer Erhöhung des Drucks aufgrund eines Einströmens von Fluid zwischen die flexiblen, fluiddichten Materiallagen des Trennelements die flexiblen, fluiddichten Materiallagen in dem Abschnitt des Sensorbereichs ihren Abstand zueinander vergrößern.

Die Funktionsweise des erfindungsgemäßen Trennelements (auch Sicherheits-Trennelement genannt) ist folgende. Sobald eine der wenigstens zwei übereinander angeordneten flexiblen, fluiddichten Materiallagen des mehrlagigen Aufbaus einen Defekt erhält, durch den das angrenzende Medium bzw. Fluid hindurchdringen kann, wie beispielsweise einen Riß oder einen Defekt aufgrund von Porosität oder Korrosion, dringt das Fluid in den Raum zwischen den durch das Distanzelement in einem Abstand zueinander gehaltenen flexiblen, fluiddichten Materiallagen ein. In diesem Raum zwischen den Materiallagen verteilt sich das Fluid und strömt bis in den an dem Trennelement vorgesehen Sensorbereich. Erfindungswesentlich ist dabei das Distanzelement, das die Durchströmbarkeit des Raumes zwischen den flexiblen, fluiddichten Materiallagen gewährleisten muß. Aufgrund des Eindringens von Fluid steigt der Druck zwischen den flexiblen, fluiddichten Materiallagen insgesamt und damit auch in dem Sensorbereich. Der Sensorbereich ist so ausgebildet, daß sich die Materiallagen in dem Abschnitt des Sensorbereichs aufgrund der Erhöhung des Drucks voneinander entfernen, d.h. ihren Abstand zueinander vergrößern. Dies kann auf verschiedene Weisen gewährleistet werden, wie nachfolgend noch ausführlicher erläutert wird. Beispielsweise kann im Sensorbereich wenigstens eine der flexiblen, fluiddichten Materiallagen leichter deformierbar ausgebildet sein als in den übrigen Bereichen des Trennelements, indem dieser Bereich der Materiallage in einer geringeren Dicke ausgebildet ist oder aus einem flexibleren Material. Die Erhöhung des Abstands der Materiallagen im Sensorbereich wird als Signal für eine Druckerhöhung zwischen den flexiblen, fluiddichten Materiallagen des Trennelements und damit für einen Defekt einer der Materiallagen erfaßt. Die Erfassung dieses Signals erfolgt mechanisch mittels eines Sensors, der die Vergrößerung des Abstands zwischen den Materiallagen im Sensorbereich als Bewegung aufnimmt und dieses Signal dann in für solche Sensoren bekannter Art und Weise als Hinweis auf den Defekt des Trennelements weiterleitet. Da das Trennelement einen mehrlagigen Aufbau besitzt und in der Regel zunächst nur eine Materiallage defekt wird, bleibt das Trennelement zum Zeitpunkt der Erfassung des Defekts noch für einen längeren Zeitraum funktionsfähig. Es kann dann zum nächstmöglichen Zeitpunkt ausgetauscht werden, wofür üblicherweise das Druckausgleichgefäß, der Druckspeicher oder der Pulsationsdämpfer von dem Leitungssystem abgekoppelt wird. Zum Zeitpunkt des Defekts tritt also kein Fluid durch das Trennelement aus einer Kammer des Druckausgleichgefäßes, des Druckspeichers oder des Pulsationsdämpfers in die andere Kammer über und vermischt sich mit dem anderen Fluid.

Ähnlich mehrlagige Aufbauten mit übereinander angeordneten flexiblen, fluiddichten Materiallagen und einem Sensorbereich, wie er für das erfindungsgemäße Trennelement vorgesehen ist, sind für Membranpumpen bereits bekannt. Ein wesentlicher Unterschied des erfindungsgemäßen Trennelements gegenüber solchen Pumpenmembranen ist jedoch das Vorsehen eines Distanzelements zwischen den flexiblen, fluiddichten Materiallagen. Bei Pumpenmembranen mit zwei übereinander angeordneten flexiblen, fluiddichten Membranlagen kann sich eine Flüssigkeit bei einem Bruch einer der Membranlagen leicht zwischen diesen Membranlagen ausbreiten und bis zum Sensorbereich gelangen, da eine Pumpenmembran hochfrequent Saug- und Druckhubbewegungen ausführt und die Membranlagen während des Saughubs der Pumpenmembran auseinandergezogen werden, so daß zwischen den einzelnen Membranlagen ständig ein für Flüssigkeit gut durchströmbarer Spalt entsteht.

Im Gegensatz dazu führt ein Trennelement für ein Druckausgleichgefäß, einen Druckspeicher oder einen Pulsationsdämpfer nahezu keine bzw. nur relativ langsame Bewegungen aus und dies mit sehr geringer Auslenkung. Zu jedem Zeitpunkt wird durch Flüssigkeit bzw. Gas von Außen ein positiver Druck von beiden Seiten auf die Materiallagen ausgeübt, so daß diese zusammengepreßt werden. Dies ist selbst bei einem Bruch einer der Materiallagen der Fall. Aufgrund dessen könnte sich eine Flüssigkeit oder ein Gas bei einem Defekt einer der flexiblen, fluiddichten Materiallagen nicht oder nicht in ausreichendem Maße zwischen den Materiallagen ausbreiten und zu dem Sensorbereich gelangen. Erfindungsgemäß ist daher vorgesehen, daß die Materiallagen durch das erfindungsgemäße Distanzelement in einem Abstand zueinander gehalten werden und das Distanzelement so ausgebildet ist, daß es eine Fluiddurchströmbarkeit sicherstellt. Nur so wird gewährleistet, daß bei einem Defekt einer der beiden flexiblen, fluiddichten Materiallagen einströmendes Fluid zeitnah bis zum Sensorbereich vordringen kann und der Defekt festgestellt wird, bevor möglicherweise auch die weitere Materiallage defekt wird und das Trennelement dann vollständig seine Funktion verliert.

In einer bevorzugten Ausführungsform des erfindungsgemäßen Trennelements ist das wenigstens eine Distanzelement als ein für Fluid durchströmbares Gewebe, Gewirke und/oder Fasermaterial ausgebildet. Dadurch wird gewährleistet, daß die flexiblen, fluiddichten Materiallagen in einem Abstand zueinander gehalten werden und damit ein Raum zwischen diesen Materiallagen geschaffen wird und sich Fluid in diesem Raum bis zum Sensorbereich ausbreiten kann.

In einer weiteren bevorzugten Ausführungsform des erfindungsgemäßen Trennelements ist das wenigstens eine Distanzelement als eine Folie, vorzugsweise eine PTFE-Folie, ausgebildet, die für eine Fluiddurchströmbarkeit wenigstens bereichsweise mit Schlitzen, Ausnehmungen, Prägungen, Erhebungen, Vertiefungen und/oder Wellenformen versehen ist. Diese eine Fluiddurchströmbarkeit gewährleistenden Elemente an einer Folie sind zweckmäßigerweise so ausgebildet, daß sie Fluidströmungswege von nahezu allen Bereichen des Trennelements bis zu dem Sensorbereich gewährleisten. Beispielsweise können dies bei einem kreisscheibenförmigen Trennelement radial und/oder konzentrisch verlaufende Schlitze in der Folie sein, wobei wenigstens ein weiterer Schlitz eine Fluidverbindung zu dem Sensorbereich schafft. Anstelle von durchgehenden Schlitzen können in der Folie auch Ausnehmungen, Prägungen, Erhebungen oder Vertiefungen vorgesehen sein, durch welche die Fluiddurchströmbarkeit bereitgestellt wird. Des weiteren kann die Folie als solche mit Wellenformen oder anderen Unregelmäßigkeiten hergestellt sein, durch welche entsprechende Räume für ein Durchströmen von Fluid zwischen den Materiallagen geschaffen werden. In diesem Fall ist es erforderlich, daß die Folie eine ausreichende Steifigkeit besitzt, so daß die Wellenformen oder andere Unregelmäßigkeiten durch den beidseitig von Außen auf die Materiallagen einwirkenden Druck nicht flachgedrückt werden.

In einer weiteren Ausführungsform des erfindungsgemäßen Trennelements ist das wenigstens eine Distanzelement als Erhebungen oder Noppen an einer oder beiden der wenigstens zwei übereinander angeordneten flexiblen, fluiddichten Materiallagen ausgebildet. Dies hat den Vorteil, daß kein separates Material zwischen die flexiblen, fluiddichten Materiallagen eingebracht werden muß, sondern der Abstand zwischen den Materiallagen und die Durchströmbarkeit für Fluid durch die entsprechenden Erhebungen oder Noppen, die sich von der Materiallage in Richtung der gegenüberliegenden Materiallage erstrecken, gewährleistet werden.

In einer weiteren bevorzugten Ausführungsform des erfindungsgemäßen Trennelements ist wenigstens eine der wenigstens zwei übereinander angeordneten flexiblen, fluiddichten Materiallagen mit dem wenigstens einen Distanzelement einstückig hergestellt. Ganz besonders vorteilhaft ist dies, wenn das Distanzelement als Erhebungen oder Noppen an einer oder beiden der wenigstens zwei flexiblen, fluiddichten Materiallagen ausgebildet ist. Solche Erhebungen oder Noppen an einer oder beiden der Materiallagen können bereits bei deren Herstellung mit angeformt werden.

In einer weiteren bevorzugten Ausführungsform des erfindungsgemäßen Trennelements sind die wenigstens zwei übereinander angeordneten flexiblen, fluiddichten Materiallagen und das wenigstens eine Distanzelement, ausgenommen in einem Abschnitt des Sensorbereichs, vollflächig oder abschnittsweise fest miteinander verbunden. Eine solche Verbindung erfolgt vorzugsweise durch Verkleben, Vulkanisieren oder Verschweißen des Distanzelements mit einer oder beiden der Materiallagen. Dadurch wird gewährleistet, daß die flexiblen, fluiddichten Materiallagen und das Distanzelement sowohl im Betrieb als auch bei einem Defekt einer der Materiallagen fest miteinander verbunden bleiben und sich nicht voneinander abheben. Insbesondere bei einem Defekt einer der Materiallagen hat dies den weiteren Vorteil, daß der erhöhte Druck bei einem Defekt nicht bereits die flexiblen, fluiddichten Materiallagen außerhalb des Sensorbereichs auseinanderdrückt, sondern erst im Sensorbereich, was eine besonders rasche Anzeige eines Defekts mit hoher Auslenkung der Abstandsvergrößerung im Sensorbereich gewährleistet.

Des weiteren ist es erfindungsgemäß besonders zweckmäßig, wenn das Trennelement am Randbereich des mehrlagigen Aufbaus wenigstens einen Einspannbereich für die Befestigung des Trennelements in einem Druckausgleichgefäß, Druckspeicher oder Pulsationsdämpfer und für eine fluiddichte Trennung eines mit einem Gas gefüllten Raums von einem mit Gas oder Flüssigkeit gefüllten Raum des Druckausgleichgefäßes, Druckspeichers oder Pulsationsdämpfers aufweist. Besonders vorteilhaft ist es, wenn der Sensorbereich in diesem Einspannbereich angeordnet ist.

Erfindungsgemäße Trennelemente können je nach Art und Aufbau eines Druckausgleichgefäßes, eines Druckspeichers oder eines Pulsationsdämpfers unterschiedliche Formen haben. Besonders vorteilhaft ist das Trennelement in der Aufsicht von oben im wesentlichen kreisscheibenförmig ausgebildet. Zur Trennung der Räume in einem Druckausgleichgefäß, Druckspeicher oder Pulsationsdämpfer wird das Trennelement dann in seinem Randbereich, d.h. dem Einspannbereich, zwischen zwei Flanschelementen eingespannt. Besonders zweckmäßig ist in diesem Randbereich bzw. Einspannbereich das Trennelement mit Dichtlippen oder Wulsten versehen, die eine Fluidabdichtung zwischen den Außenseiten des Einspannbereichs und dem Flanschelement gewährleisten. Ist der Sensorbereich des Trennelements in dem Einspannbereich angeordnet, so kann an dem den Einspannbereich erfassenden Flanschelement auf einfache Weise auch ein entsprechender Sensor angebracht werden, der direkt an dem Sensorbereich des Trennelements für eine Erfassung einer mechanischen Auslenkung wenigstens einer der Materiallagen vorgesehen ist.

Alternativ kann bei einem im wesentlichen kreisscheibenförmig ausgebildeten Trennelement der Sensorbereich auch in einem sich von dem Randbereich der Kreisscheibe nach außen erstreckenden Abschnitt des Trennelements angeordnet sein. In diesem Fall kann der entsprechende Sensor außerhalb des Einspannflansches vorgesehen sein. Wenn beispielsweise ein Druckausgleichgefäß, Druckspeicher oder Pulsationsdämpfer aus zwei Gehäusehälften besteht, zwischen denen das Trennelement im Einspannbereich dichtend eingespannt wird, kann der Sensorbereich des Trennelements aus dem Gehäuse des Druckausgleichgefäßes, Druckspeichers oder Pulsationsdämpfers herausragen und der Sensor von außen angebracht sein.

Das erfindungsgemäße Trennelement kann auch im wesentlichen zylinderförmig oder schlauchförmig ausgebildet sein, wobei es dann zweckmäßig ist, daß an jedem der beiden Enden des zylinderförmigen oder schlauchförmigen Trennelements im Randbereich Einspannbereiche vorgesehen sind. Zweckmäßigerweise erstrecken sich die Randbereiche eines solchen zylinderförmigen oder schlauchförmigen Trennelements an den jeweiligen Enden in bezug auf die Längsachse radial nach außen, wodurch eine einfachere Einspannung der Endabschnitte mittels Flanschen möglich ist.

In einer weiteren Ausführungsform des erfindungsgemäßen Trennelements ist dieses in der Form einer Blase oder eines Ballons mit einer Durchgangsöffnung zum Inneren der Blase oder des Ballons ausgebildet. Üblicherweise wird ein Druckausgleichgefäß, Druckspeicher oder Pulsationsdämpfer mit einem blasenförmigen oder ballonförmigen Trennelement ein Gefäß mit einer Öffnung sein, an der das Trennelement eingespannt ist. Das Gefäß selber wird ein größeres Innenvolumen haben als das blasenförmige oder ballonförmige Trennelement, und das den Druck aufnehmende Gas wird sich in dem Innenraum des blasenförmigen oder ballonförmigen Trennelements befinden. Der Raum zwischen der Außenseite des blasenförmigen oder ballonförmigen Trennelements und den Innenwänden des Gefäßes wird mit dem Leitungssystem in Verbindung stehen, in dem sich die Flüssigkeit oder das Gas befindet, dessen Druck auszugleichen oder dessen Pulsation zu dämpfen ist.

Der Sensorbereich des erfindungsgemäßen Trennelements weist, wie der übrige Bereich des Trennelements, zwei übereinander angeordnete flexible, fluiddichte Materiallagen auf. Üblicherweise sind diese Materiallagen des Sensorbereichs einstückig mit den Materiallagen des übrigen Bereichs des Trennelements verbunden bzw. in einem Stück und aus dem gleichen Material hergestellt. Sie können alternativ jedoch aus einem anderen Material bestehen und an die flexiblen, fluiddichten Materiallagen des übrigen Bereichs des Trennelements angefügt sein. Zwischen den flexiblen, fluiddichten Materiallagen im Sensorbereich des Trennelements kann das erfindungsgemäße Distanzelement ebenfalls vorgesehen sein. Zweckmäßig ist es jedoch, wenn im Sensorbereich kein Distanzelement vorgesehen ist, so daß in dem Sensorbereich ein größerer Hohlraum vorhanden ist.

Wie oben bereits ausgeführt wurde, ist es erfindungsgemäß zweckmäßig, wenn in dem Sensorbereich des Trennelements wenigstens eine der wenigstens zwei übereinander angeordneten flexiblen, fluiddichten Materiallagen unter Druck leichter deformierbar ausgebildet ist als in den übrigen Bereichen des Trennelements. Dies kann durch geringere Materialdicke oder durch Auswahl eines Materials mit höherer Elastizität als das Material der Materiallagen im übrigen Bereich des Trennelements erfolgen. Es ist ausreichend und erfindungsgemäß vorteilhaft, wenn nur eine der Materiallagen in dem Sensorbereich eine höhere Deformierbarkeit aufweist als die Materiallagen in den übrigen Bereichen des Trennelements, da man eine Vergrößerung des Abstands zwischen den Materiallagen im Sensorbereich nur von einer Seite außerhalb des Trennelements erfassen wird. Die andere Materiallage im Sensorbereich wird zweckmäßigerweise im eingespannten Zustand in einem Druckausgleichgefäß, Druckspeicher oder Pulsationsdämpfer an einer festen Unterlage anliegen, so daß die Auslenkung im Sensorbereich nur in einer Richtung erfolgt.

Die Erfindung betrifft neben dem erfindungsgemäßen Trennelement auch ein Druckausgleichgefäß, einen Druckspeicher oder einen Pulsationsdämpfer mit einem erfindungsgemäßen Trennelement der vorbeschriebenen Art für eine fluiddichte Trennung eines mit einem Gas gefüllten Raums von einem mit Gas oder Flüssigkeit gefüllten Raum des Druckausgleichgefäßes, Druckspeichers oder Pulsationsdämpfers und mit einem an dem Sensorbereich des Trennelements angeordneten Sensor, welcher auf eine Deformation wenigstens einer der wenigstens zwei übereinander angeordneten flexiblen, fluiddichten Materiallagen in dem Abschnitt des Sensorbereichs anspricht.

Weitere Vorteile, Merkmale und Ausführungsformen des erfindungsgemäßen Trennelements und des erfindungsgemäßen Druckausgleichgefäßes, Druckspeichers oder Pulsationsdämpfers werden nun anhand der nachfolgenden Ausführungsbeispiele und der dazugehörigen Figuren beschrieben. Es sollte klar sein, daß sich sämtliche Einzelmerkmale beschriebener Ausführungsformen erfindungsgemäßer Trennelemente auch auf andere Ausführungsformen erfindungsgemäßer Trennelemente anwenden und mit diesen kombinieren lassen, soweit dies technisch möglich ist, was der Fachmann erkennen wird. Für bestimmte Ausführungsformen beschriebene Merkmale sind somit nicht auf die speziell beschriebene Ausführungsform beschränkt, sondern mit sämtlichen anderen Merkmalen erfindungsgemäßer Trennelemente aus dieser Beschreibung kombinierbar.

In den Figuren sind gleiche oder einander hinsichtlich ihrer Funktion entsprechende Teile mit gleichen Bezugszahlen bezeichnet.
- Figur 1: zeigt ein erfindungsgemäßes Trennelement für ein Druckausgleichgefäß, einen Druckspeicher oder einen Pulsationsdämpfer im Querschnitt von der Seite, eine Ausschnittsvergrößerung davon im Sensorbereich sowie eine perspektivische Ansicht des Trennelementes schräg von oben.
- Figur 2: zeigt die flexiblen, fluiddichten Materiallagen und das Distanzelement des erfindungsgemäßen Trennelementes gemäß Figur 1 im Querschnitt und voneinander getrennt sowie eine Ausschnittsvergrößerung einer Draufsicht auf die untere flexible, fluiddichte Materiallage im Sensorbereich.
- Figur 3: zeigt ein Druckausgleichgefäß, einen Druckspeicher oder einen Pulsationsdämpfer mit dem erfindungsgemäßen Trennelement gemäß Figur 1 in perspektivischer Ansicht schräg von oben.
- Figur 4: zeigt das Druckausgleichgefäß, den Druckspeicher oder den Pulsationsdämpfer gemäß Figur 3 im Querschnitt in abgebrochener Darstellung sowie eine Ausschnittsvergrößerung im Sensorbereich des erfindungsgemäßen Trennelementes.
- Figur 5: zeigt eine alternative Ausführungsform eines Distanzelements des erfindungsgemäßen Trennelements in einer Seitenansicht sowie in einer Ansicht von oben.
- Figur 6: zeigt eine weitere alternative Ausführungsform des erfindungsgemäßen Trennelements, bei dem das Distanzelement einstückig mit einer flexiblen, fluiddichten Materiallage ausgebildet ist, im Querschnitt und mit voneinander getrennten flexiblen, fluiddichten Materiallagen sowie eine Ausschnittsvergrößerung einer Draufsicht auf die untere flexible, fluiddichte Materiallage im Sensorbereich.
- Figur 7: zeigt eine weitere Ausführungsform des erfindungsgemäßen Trennelements in der Form einer Blase oder eines Ballons im Querschnitt von der Seite sowie Ausschnittsvergrößerungen der im Querschnitt mit A und B bezeichneten Bereiche.
- Figur 8: zeigt das erfindungsgemäße Trennelement gemäß Figur 7 in einer perspektivischen Ansicht des Trennelementes schräg von oben.
- Figur 9: zeigt ein Druckausgleichgefäß, einen Druckspeicher oder einen Pulsationsdämpfer mit dem erfindungsgemäßen Trennelement gemäß den Figuren 7 und 8 im Querschnitt von der Seite.
- Figur 10: zeigt eine weitere alternative Ausführungsform des erfindungsgemäßen Trennelements, bei der das Trennelement im wesentlichen zylinderförmig oder schlauchförmig ausgebildet ist, im Querschnitt von der Seite sowie Ausschnittsvergrößerungen der im Querschnitt mit A und B bezeichneten Bereiche sowie eine perspektivische Ansicht des Trennelementes schräg von oben.
- Figur 11: zeigt ein Druckausgleichgefäß, einen Druckspeicher oder einen Pulsationsdämpfer mit dem erfindungsgemäßen Trennelement gemäß Figur 10 im Querschnitt von der Seite.
- Figur 12: zeigt eine zu dem Trennelement gemäß Figur 1 alternative Ausführungsform des erfindungsgemäßen Trennelements für ein Druckausgleichgefäß, einen Druckspeicher oder einen Pulsationsdämpfer im Querschnitt von der Seite und als perspektivische Ansicht schräg von oben, wobei das Trennelement im mittleren Bereich zusätzlich ein Versteifungselement oder Stützelement aufweist.

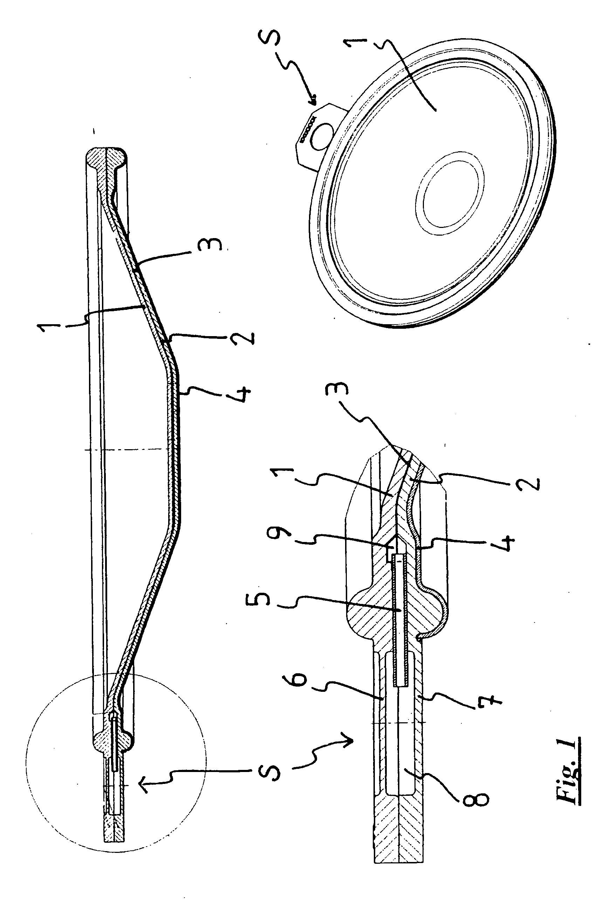

Figur 1 zeigt eine Ausführungsform des erfindungsgemäßen Trennelements für ein Druckausgleichgefäß, einen Druckspeicher oder einen Pulsationsdämpfer im Querschnitt von der Seite (Figur 1 oben), eine Ausschnittsvergrößerung davon im Sensorbereich S (Figur 1 unten links) sowie eine perspektivische Ansicht des Trennelements schräg von oben (Figur 1 unten rechts). Das Trennelement umfaßt eine erste flexible, fluiddichte Materiallage 1 aus einem Elastomer, eine zweite flexible, fluiddichte Materiallage 2 aus einem Elastomer und ein dazwischen angeordnetes Distanzelement 3, welches zwischen den Materiallagen 1 und 2 einen Abstand schafft und für Fluid durchströmbar ist. In der in Figur 1 dargestellten Ausführungsform ist das Distanzelement 3 ein für Fluid durchströmbares Gewebe. Die untere flexible, fluiddichte Materiallage 2 ist in der in Figur 1 dargestellten Ausführungsform auf der Außenseite zusätzlich mit einer Schutzfolie 4 aus PTFE (Polyfluorethylen) versehen, um die Materiallage 2 vor chemischem Angriff und Korrosion durch das mit dem Trennelement in Kontakt kommende Fluid zu schützen.

Der in Figur 1 unten links vergrößert dargestellte Sensorbereich S weist einstückig mit den Materiallagen 1 und 2 ausgebildete Abschnitte 6 bzw. 7 der Materiallagen auf, in denen das Material dünner ausgebildet ist als in den verbleibenden Bereichen des Trennelements. Zwischen diesen Abschnitten 6 und 7 der Materiallagen ist ein Raum 8 ausgebildet, der über einen Verbindungskanal 5 mit einem weiteren Hohlraum 9 in Verbindung steht, welche sich unmittelbar an die zusammengefügten Materiallagen 1 und 2 und das Distanzelement 3 anschließt.

Tritt bei einer der Materiallagen 1 oder 2 eine Undichtigkeit auf, beispielsweise aufgrund eines Bruchs einer der Materiallagen, dann strömt aufgrund des hohen Außendrucks Fluid zwischen die Materiallagen 1 und 2. Aufgrund des Distanzelements 3, das die flexiblen, fluiddichten Materiallagen 1 und 2 in einem Abstand zueinander hält und einen für Fluid durchströmbaren Raum schafft, breitet sich das eindringende Fluid (Gas oder Flüssigkeit) zwischen den Materiallagen 1 und 2 aus und dringt über den Hohlraum 9 und den Verbindungskanal 5 in den Raum 8 zwischen den verdünnten Abschnitten 6 und 7 der Materiallagen 1 und 2 ein. Da die Abschnitte 6 und 7 der Materiallagen 1 und 2 aus dem gleichen Material, jedoch dünner ausgebildet sind, weisen sie eine höhere Flexibilität als die Materiallagen 1 und 2 in den übrigen Bereichen des Trennelements auf. Verursacht durch das Eindringen von Fluid und die damit verbundene Erhöhung des Innendrucks zwischen den Materiallagen, werden die Abschnitte 6 und 7 der Materiallagen auseinander gedrückt. Diese Ausdehnung der Abschnitte 6 und 7 im Sensorbereich S kann mechanisch über einen auf der Außenseite eines der Abschnitte 6 oder 7 angeordneten Sensors als Signal für ein defektes Trennelement aufgenommen und weitergeleitet werden.

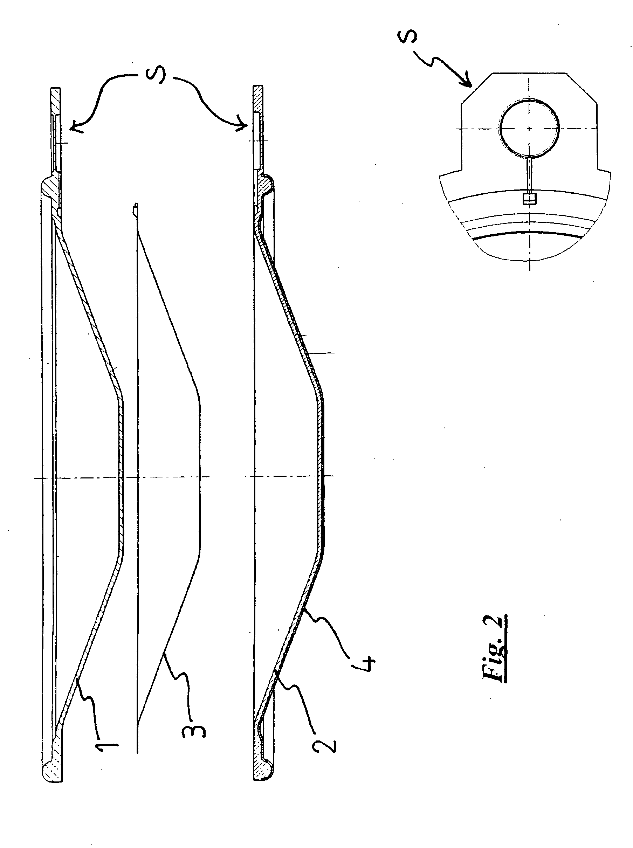

Figur 2 zeigt die flexiblen, fluiddichten Materiallagen 1 und 2 und das Distanzelement 3 des erfindungsgemäßen Trennelements gemäß Figur 1 im Querschnitt und voneinander getrennt. Des weiteren zeigt Figur 2 eine Ausschnittsvergrößerung einer Draufsicht auf die untere flexible, fluiddichte Materiallage im Sensorbereich S.

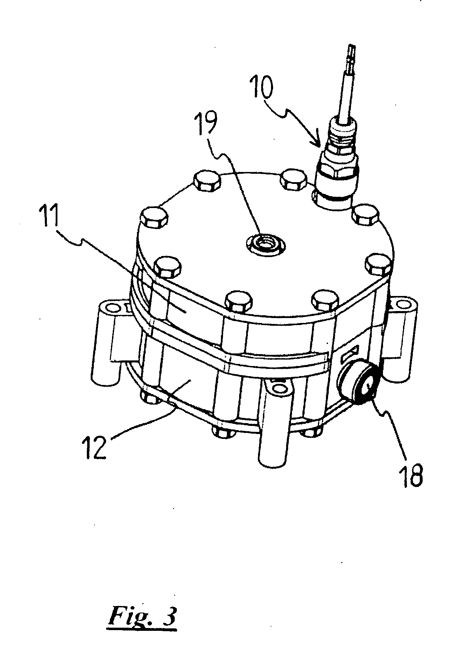

Figur 3 zeigt ein Druckausgleichgefäß, einen Druckspeicher oder einen Pulsationsdämpfer mit dem erfindungsgemäßen Trennelement gemäß Figur 1 in perspektivischer Ansicht schräg von oben. Das Druckausgleichgefäß, der Druckspeicher oder der Pulsationsdämpfer gemäß Figur 3 weist eine obere Gehäusehälfte 11 und eine untere Gehäusehälfte 12 auf, zwischen denen das Trennelement eingespannt ist. Des weiteren ist in der oberen Gehäusehälfte 11 ein Sensor 10 angeordnet, der sich im Inneren dieser oberen Gehäusehälfte 11 bis über den Sensorbereich S des Trennelements erstreckt.

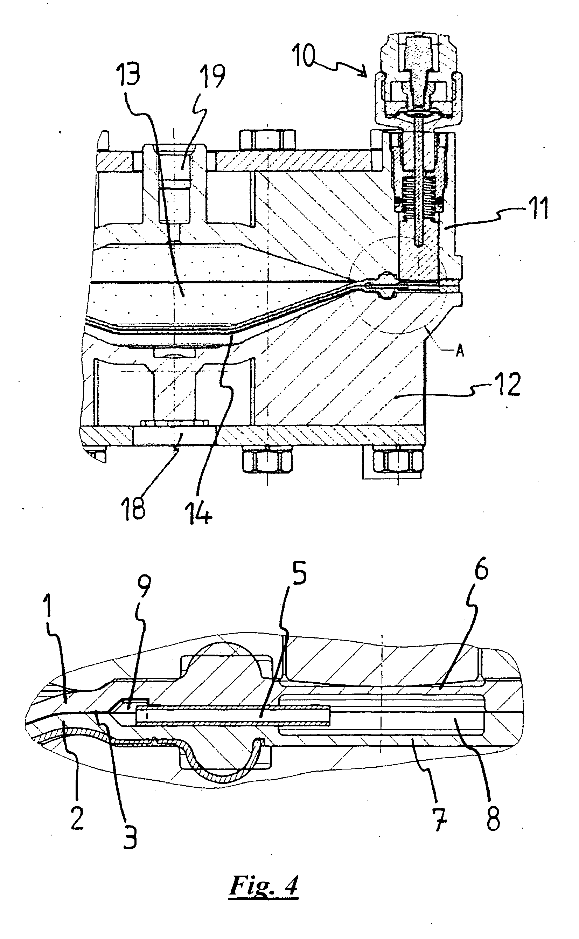

Figur 4 zeigt das Druckausgleichgefäß, den Druckspeicher oder den Pulsationsdämpfer gemäß Figur 3 im Querschnitt in abgebrochener Darstellung (Figur 4 oben) sowie eine Ausschnittsvergrößerung im Sensorbereich S des erfindungsgemäßen Trennelements (Figur 4 unten). In dem Druckausgleichgefäß, Druckspeicher oder Pulsationsdämpfer ist über dem zwischen den Gehäusehälften 11 und 12 eingespannten Trennelement eine Druck- bzw. Volumenausgleichskammer 13 vorgesehen, die über eine Verbindung 19 mit einem Vorratsbehälter für Druckausgleichsmedium verbunden ist. Das Druckausgleichsmedium kann eine Flüssigkeit oder ein Gas sein. Vorzugsweise ist das Druckausgleichsmedium ein Gas, das unter einem Druck gehalten wird, der je nach Betriebszustand größer, kleiner oder gleich dem normalen Arbeitsdruck im Fluidleitungssystem ist, so daß Druckschwankungen in der Form kurzzeitiger Druckerhöhungen im Fluidleitungssystem ausgeglichen werden. Unterhalb des zwischen den Gehäusehälften 11 und 12 eingespannten Trennelements ist eine Fluidkammer 14 vorgesehen, die über eine Verbindung 18 mit dem Fluidleitungssystem, dessen Druckschwankungen auszugleichen sind, in Verbindung steht. Das Fluid in dem Fluidleitungssystem kann eine Flüssigkeit oder ein Gas sein.

Bei der in Figur 4 dargestellten Ausführungsform liegt der Abschnitt 7 im Sensorbereich S der Materiallage 2 an einer glatten Fläche der unteren Gehäusehälfte 12 an, so daß sich der Abschnitt 7 bei einer Erhöhung des Drucks im Raum 8 nicht auswölben kann. Über dem Abschnitt 6 im Sensorbereich S der Materiallage 1 ist in der oberen Gehäusehälfte 11 hingegen eine Durchgangsbohrung vorgesehen, in der sich ein Sensor 10 bis unmittelbar über den Abschnitt 6 erstreckt. Der Sensor 10 kann in vielfältiger Weise zur Erfassung einer Auswölbung des Abschnitts 6 aufgrund einer Druckerhöhung im Raum 8 ausgestaltet sein. Derartige Sensoren sind an sich bekannt und als solche nicht Gegenstand der Erfindung. Bei einer Druckerhöhung im Raum 8 aufgrund eines Bruchs einer der Membranlagen 1 oder 2 wölbt sich der Abschnitt 6 in Richtung des Sensors 10 aus und drückt den an dem Abschnitt 6 anliegenden Teil des Sensors 10 aufwärts. Diese Bewegung wird von dem Sensor als mechanisches und/oder elektrisches Signal für einen Bruch der Materiallagen 1 und/oder 2 weitergeleitet.

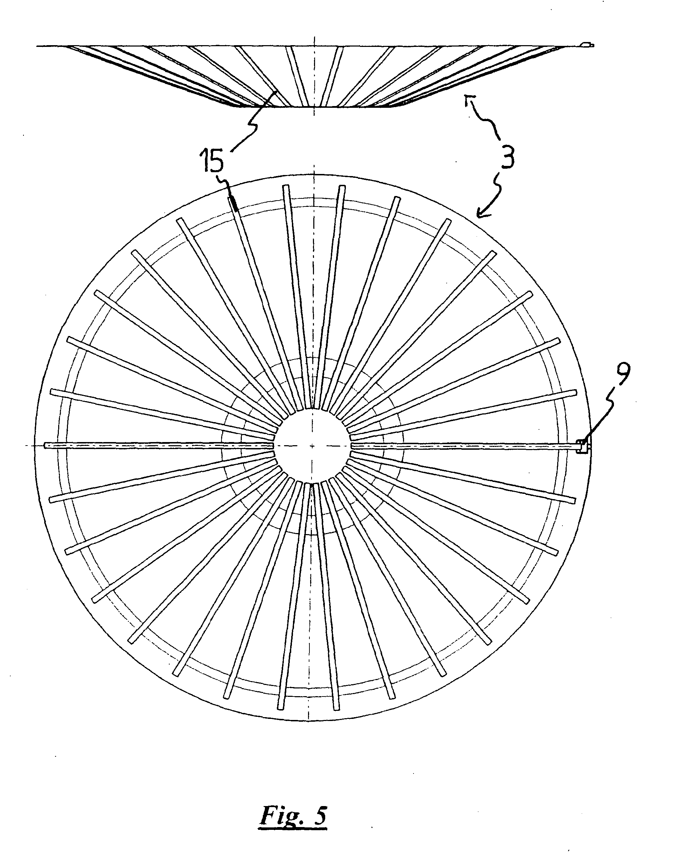

Figur 5 zeigt eine alternative Ausführungsform eines Distanzelements 3 des erfindungsgemäßen Trennelements in einer Seitenansicht sowie in einer Ansicht von oben. Das Distanzelement 3 gemäß Figur 5 ist als eine mit radial angeordneten Schlitzen 15 versehene PTFE-Folie ausgebildet. Dringt Fluid aufgrund eines Bruchs einer der beiden flexiblen, fluiddichten Materiallagen in das Trennelement ein, so breitet sich das Fluid entlang der radial verlaufenden Schlitze 15 zwischen den Materiallagen aus. Das Fluid kann bei einem Bruch in einem äußeren Bereich der Materiallagen über die Schlitze 15 zur Mitte des Trennelements strömen und sich dann über weitere Schlitze über den Hohlraum 9 bis zum Sensorbereich ausbreiten.

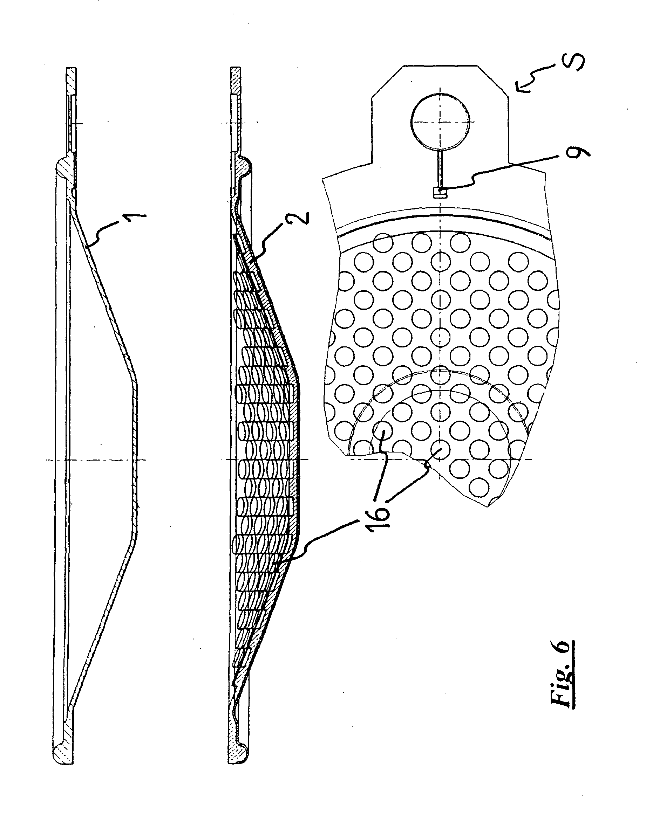

Figur 6 zeigt eine weitere alternative Ausführungsform des erfindungsgemäßen Trennelements, bei dem das Distanzelement 3 einstückig mit der flexiblen, fluiddichten Materiallage 2 ausgebildet ist, nämlich als an der Innenfläche der Materiallage 2 ausgebildete Erhebungen in der Form von kreisförmigen Noppen 16. Im zusammengefügten Trennelement liegen die Noppen 16 der Materiallage 2 an der Innenfläche der Materiallage 1 an. Durch die Zwischenräume zwischen den Noppen 16 wird ein für Fluid durchströmbarer Raum zwischen den flexiblen, fluiddichten Materiallagen 1 und 2 geschaffen. Dringt Fluid aufgrund eines Bruchs einer der Materiallagen 1 oder 2 in das Trennelement ein, so breitet es sich in diesem Raum zwischen den Materiallagen aus und strömt über den Hohlraum 9 in den Sensorbereich S.

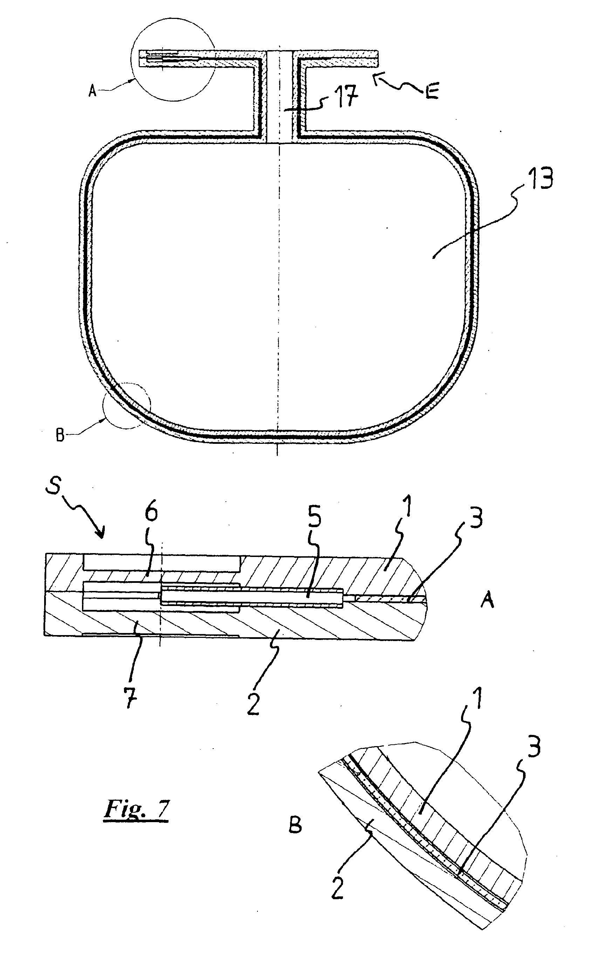

Figur 7 zeigt eine weitere Ausführungsform des erfindungsgemäßen Trennelements in der Form einer Blase oder eines Ballons mit einer Durchgangsöffnung 17 zum Inneren der Blase. Das Innere der Blase stellt die Druck- bzw. Volumenausgleichskammer 13 dar. Der Aufbau dieses Trennelements umfaßt flexible, fluiddichte Materiallagen 1 und 2 und ein dazwischen angeordnetes Distanzelement 3. An den Randbereichen der Materiallagen 1 und 2 ist ein Einspannbereich E vorgesehen, mit dem das Trennelement zwischen entsprechenden Gehäuseteilen fluiddicht eingespannt wird. Die mittlere Darstellung in Figur 7 zeigt eine Ausschnittsvergrößerung des Sensorbereichs S, der in der oberen Darstellung in Figur 7 mit "A" bezeichnet ist. Die untere Darstellung in Figur 7 zeigt eine Ausschnittsvergrößerung des Wandbereichs, der in der oberen Darstellung in Figur 7 mit "B" bezeichnet ist.

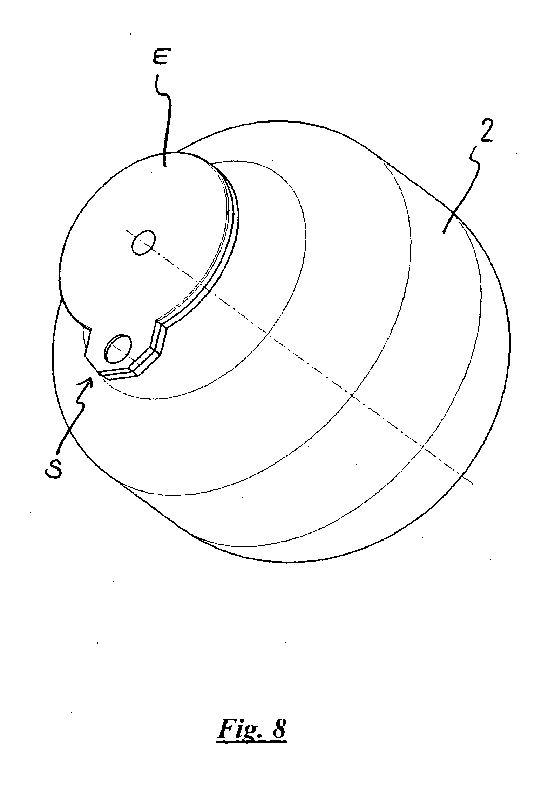

Figur 8 zeigt das erfindungsgemäße Trennelement gemäß Figur 7 in einer perspektivischen Ansicht schräg von oben.

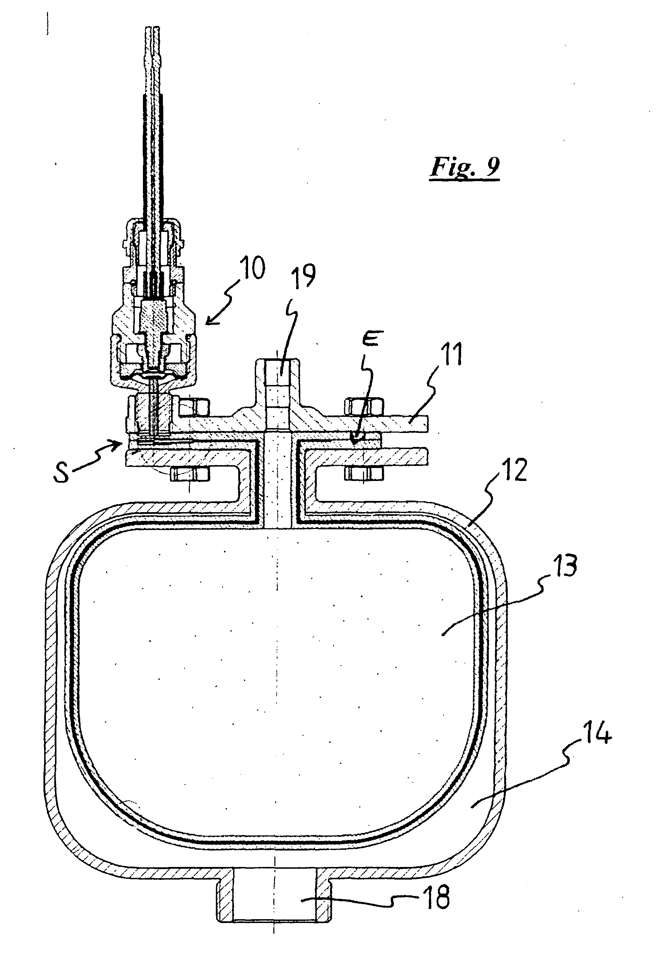

Figur 9 zeigt ein Druckausgleichgefäß, einen Druckspeicher oder einen Pulsationsdämpfer mit dem erfindungsgemäßen Trennelement gemäß den Figuren 7 und 8 im Querschnitt von der Seite. Das Druckausgleichgefäß, der Druckspeicher oder der Pulsationsdämpfer umfaßt eine obere Gehäusehälfte 11 und eine untere Gehäusehälfte 12. Das Trennelement ist im Einspannbereich zwischen den Gehäusehälften 11 und 12 fluiddicht eingespannt. An der oberen Gehäusehälfte 11 ist eine Bohrung vorgesehen, in der ein Sensor 10 angeordnet ist, wie er zuvor bereits erläutert wurde. Die untere Gehäusehälfte 12 hat ein Innenvolumen, das größer ist als das blasenförmige Trennelement, so daß zwischen der Außenseite des Trennelements und den Innenwänden des Gefäßes ein Raum vorhanden ist, die Fluidkammer 14, welche über eine Verbindung 18 mit dem Fluidleitungssystem in Verbindung steht.

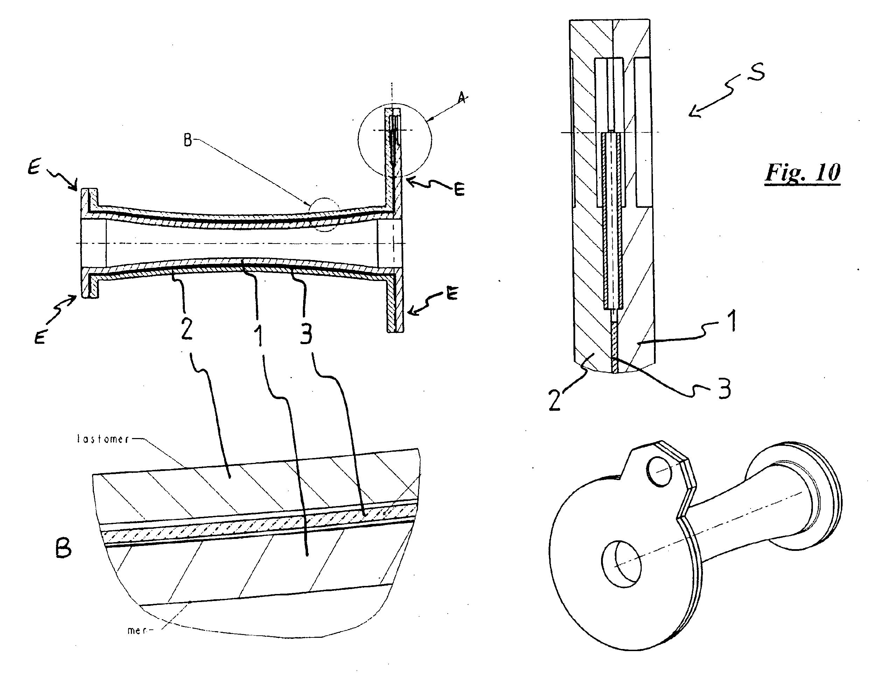

Figur 10 zeigt eine weitere alternative Ausführungsform des erfindungsgemäßen Trennelements, bei der das Trennelement im wesentlichen zylinderförmig oder schlauchförmig ausgebildet ist. Die Darstellung in Figur 10 links oben zeigt das Trennelement im Querschnitt von der Seite, die Darstellung in Figur 10 rechts unten zeigt eine perspektivische Ansicht des Trennelements schräg von oben, und die Darstellungen in Figur 10 rechts oben und links unten zeigen Ausschnittsvergrößerungen der Bereiche, die in der Darstellung links oben mit "A" und "B" bezeichnet sind. Das Trennelement gemäß Figur 10 weist auf beiden Seiten Einspannbereiche E auf, die sich radial bezüglich der Längsachse des Trennelements erstrecken. Der auf einer Seite des Trennelements angeordnete Sensorbereich S ist im wesentlichen ausgebildet, wie er zuvor beschrieben wurde.

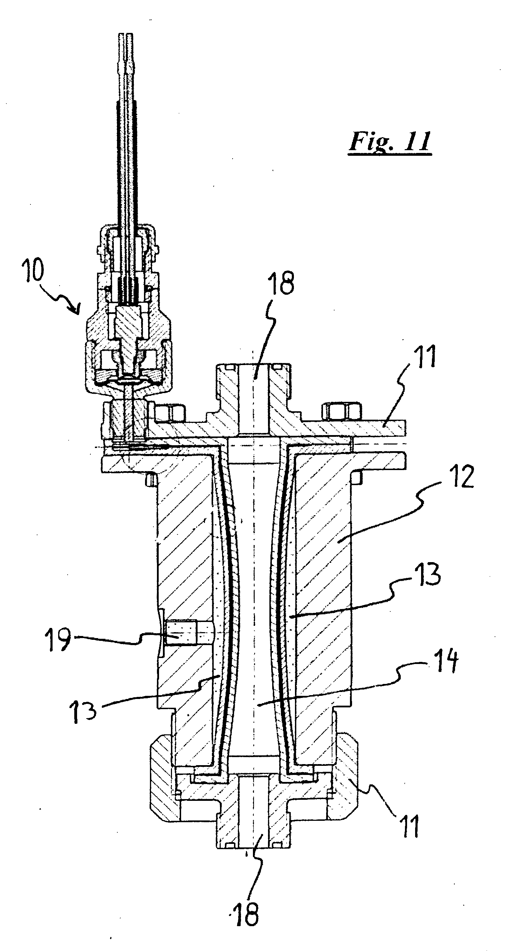

Figur 11 zeigt ein Druckausgleichgefäß, einen Druckspeicher oder einen Pulsationsdämpfer mit dem erfindungsgemäßen Trennelement gemäß Figur 10 im Querschnitt von der Seite. In den Einspannbereichen E ist das Trennelement fluiddicht zwischen Gehäuseteilen 11 und 12 eingespannt. Zwischen dem Gehäuseteil 12 und der Außenseite des Trennelements ist eine Druck- bzw. Volumenausgleichskammer 13 vorgesehen, die über eine Verbindung 19 mit einem Vorratsbehälter für Druckausgleichsmedium in Verbindung steht. Der Innenraum des Trennelements stellt die Fluidkammer 14 dar, die im Betrieb mit dem Leitungssystem in Verbindung steht, dessen Druck auszugleichen oder dessen Pulsation zu dämpfen ist. Die Ausführungsform des zylinderförmigen oder schlauchförmigen Trennelements gemäß den Figuren 10 und 11 kann direkt für einen Durchfluß von Flüssigkeit oder Gas in ein Leitungssystem integriert werden. An den Gehäuseteilen 11 sind hierfür Verbindungen 18 zum Fluidleitungssystem vorgesehen.

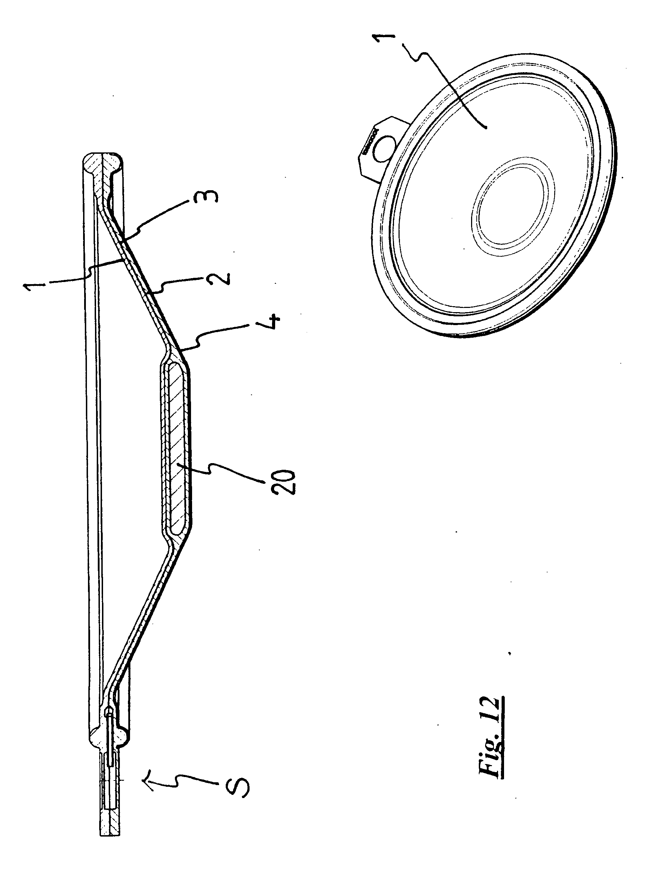

Figur 12 zeigt eine alternative Ausführungsform des erfindungsgemäßen Trennelements, die sich von der Ausführungsform gemäß Figur 1 im wesentlichen dadurch unterscheidet, daß es im mittleren Bereich zusätzlich ein in die untere flexible, fluiddichte Materiallage 2 eingebettetes Versteifungselement oder Stützelement 20 aufweist. Das Versteifungselement oder Stützelement 20 verleiht dem Trennelement zusätzliche Stabilität. Im übrigen ist das Trennelement gemäß Figur 12 wie die Ausführungsform gemäß Figur 1 aufgebaut.

### Bezugszeichen

- 1: flexible, fluiddichte Materiallage
- 2: flexible, fluiddichte Materiallage
- 3: Distanzelement
- 4: Schutzfolie
- 5: Verbindungskanal
- 6: verdünnter Abschnitt der flexiblen, fluiddichten Materiallage 1
- 7: verdünnter Abschnitt der flexiblen, fluiddichten Materiallage 2
- 8: Raum
- 9: Hohlraum
- 10: Sensor
- 11: obere Gehäusehälfte von Druckausgleichgefäß, Druckspeicher oder Pulsationsdämpfer
- 12: untere Gehäusehälfte von Druckausgleichgefäß, Druckspeicher oder Pulsationsdämpfer
- 13: Druck- bzw. Volumenausgleichskammer
- 14: Fluidkammer
- 15: Schlitze
- 16: Noppen
- 17: Durchgangsöffnung
- 18: Verbindung zum Fluidleitungssystem
- 19: Verbindung zum Vorratsbehälter für Druckausgleichsmedium
- 20: Versteifungselement oder Stützelement

- S: Sensorbereich
- E: Einspannbereich

## Patentansprüche

1. Trennelement für ein Druckausgleichgefäß, einen Druckspeicher oder einen Pulsationsdämpfer, wobei das Trennelement einen mehrlagigen Aufbau besitzt mit
wenigstens zwei übereinander angeordneten flexiblen, fluiddichten Materiallagen (1, 2) und
wenigstens einem Distanzelement (3), welches zwischen den flexiblen, fluiddichten Materiallagen angeordnet ist und diese in einem Abstand zueinander hält, wobei das wenigstens eine Distanzelement so ausgebildet ist, daß der Raum zwischen den flexiblen, fluiddichten Materiallagen (1, 2) wenigstens bereichsweise für Fluid durchströmbar ist, und wobei Trennelement an einem Randbereich des mehrlagigen Aufbaus einen Sensorbereich (S) aufweist, der mit dem verbleibenden Raum zwischen den flexiblen, fluiddichten Materiallagen in einer für Fluid durchströmbaren Verbindung steht, **dadurch gekenzeichnet, daß**
der Sensorbereich so ausgebildet ist, daß bei einer Erhöhung des Drucks aufgrund eines Einströmens von Fluid zwischen die flexiblen, fluiddichten Materiallagen (1, 2) des Trennelements die flexiblen, fluiddichten Materiallagen (1, 2) in dem Abschnitt des Sensorbereichs (S) ihren Abstand zueinander vergrößern.

2. Trennelement nach Anspruch 1, wobei die wenigstens zwei übereinander angeordneten flexiblen, fluiddichten Materiallagen und das wenigstens eine Distanzelement (3), ausgenommen in einem Abschnitt des Sensorbereichs (S), vollflächig oder abschnittsweise fest miteinander verbunden sind, vorzugsweise durch Verkleben oder Verschweißen.

3. Trennelement nach Anspruch 1, wobei wenigstens eine der wenigstens zwei übereinander angeordneten flexiblen, fluiddichten Materiallagen und das wenigstens eine Distanzelement (3) einstückig hergestellt sind.

4. Trennelement nach einem der Ansprüche 1 bis 3, wobei das wenigstens eine Distanzelement (3) als ein für Fluid durchströmbares Gewebe, Gewirke und/oder Fasermaterial ausgebildet ist.

5. Trennelement nach einem der Ansprüche 1 bis 3, wobei das wenigstens eine Distanzelement (3) als eine Folie, vorzugsweise eine PTFE-Folie, ausgebildet ist, die für eine Fluiddurchströmbarkeit wenigstens bereichsweise mit Schlitzen (15), Ausnehmungen, Prägungen, Erhebungen (16), Vertiefungen und/oder Wellenformen versehen ist.

6. Trennelement nach einem der Ansprüche 1 bis 3, wobei das wenigstens eine Distanzelement (3) als Erhebungen, Noppen (16) und/oder Vertiefungen an einer oder beiden der wenigstens zwei übereinander angeordneten flexiblen, fluiddichten Materiallagen (1, 2) ausgebildet ist.

7. Trennelement nach einem der vorausgehenden Ansprüche, wobei das Trennelement am Randbereich des mehrlagigen Aufbaus wenigstens einen Einspannbereich (E) für die Befestigung des Trennelements in einem Druckausgleichgefäß, Druckspeicher oder Pulsationsdämpfer und für eine fluiddichte Trennung eines mit einem Gas gefüllten Raumes (13) von einem mit Gas oder Flüssigkeit gefüllten Raum (14) des Druckausgleichgefäßes, Druckspeichers oder Pulsationsdämpfers aufweist.

8. Trennelement nach Anspruch 7, wobei der Sensorbereich (S) im Einspannbereich (E) angeordnet ist.

9. Trennelement nach einem der vorausgehenden Ansprüche, wobei das Trennelement in der Aufsicht von oben im wesentlichen kreisscheibenförmig ausgebildet ist, wobei der Sensorbereich (S) im Randbereich der Kreisscheibe angeordnet ist oder der Sensorbereich (S) in einem sich vom Randbereich der Kreisscheibe nach außen erstreckenden Abschnitt des Trennelements angeordnet ist.

10. Trennelement nach einem der Ansprüche 1 bis 8, wobei das Trennelement im wesentlichen zylinderförmig oder schlauchförmig ausgebildet ist.

11. Trennelement nach einem der Ansprüche 1 bis 8, wobei das Trennelement in Form einer Blase oder eines Ballons mit einer Durchgangsöffnung zum Inneren der Blase oder des Ballons ausgebildet ist.

12. Trennelement nach einem der vorausgehenden Ansprüche, wobei im Sensorbereich (S) des Trennelements zwischen den wenigstens zwei übereinander angeordneten flexiblen, fluiddichten Materiallagen (1, 2) kein Distanzelement (3) vorgesehen ist.

13. Trennelement nach einem der vorausgehenden Ansprüche, wobei im Sensorbereich (S) des Trennelements wenigstens eine der wenigstens zwei übereinander angeordneten flexiblen, fluiddichten Materiallagen (1, 2) unter Druck leichter deformierbar ausgebildet ist als in den übrigen Bereichen des Trennelements.

14. Trennelement nach Anspruch 13, wobei im Sensorbereich (S) des Trennelements wenigstens einer der wenigstens zwei übereinander angeordneten flexiblen, fluiddichten Materiallagen (1, 2) für eine leichtere Deformierbarkeit unter Druck eine geringere Materialdicke aufweist als in den übrigen Bereichen des Trennelements.

15. Trennelement nach einem der Ansprüche 13 oder 14, wobei im Sensorbereich (S) des Trennelements wenigstens einer der wenigstens zwei übereinander angeordneten flexiblen, fluiddichten Materiallagen (1, 2) für eine leichtere Deformierbarkeit unter Druck eine höhere Elastizität aufweist als in den übrigen Bereichen des Trennelements.

16. Trennelement nach einem der vorausgehenden Ansprüche, wobei an dem Sensorbereich (S) des Trennelements ein Sensor (10) angeordnet ist, welcher auf eine Deformation wenigstens einer der der wenigstens zwei übereinander angeordneten flexiblen, fluiddichten Materiallagen (1, 2) in dem Abschnitt des Sensorbereiches (S) anspricht.

17. Trennelement nach einem der vorausgehenden Ansprüche, wobei zwischen den flexiblen, fluiddichten Materiallagen (1, 2) zusätzlich ein Versteifungselement oder Stützelement (20) vorgesehen ist.

18. Druckausgleichgefäß, Druckspeicher oder Pulsationsdämpfer mit einem Trennelement gemäß einem der vorausgehenden Ansprüche für eine fluiddichte Trennung eines mit einem Gas gefüllten Raumes (13) von einem mit Gas oder Flüssigkeit gefüllten Raum (14) des Druckausgleichgefäßes, Druckspeichers oder Pulsationsdämpfers und mit einem an dem Sensorbereich (S) des Trennelements ein Sensor (10) angeordnet ist, welcher auf eine Deformation wenigstens einer der wenigstens zwei übereinander angeordneten flexiblen, fluiddichten Materiallagen (1, 2) in dem Abschnitt des Sensorbereiches (S) anspricht.

## Claims

1. A separation element for a pressure compensation vessel, a pressure reservoir or a pulsation damper, wherein the separation element is of a multi-layer structure with
at least two mutually superposed flexible, fluid-tight material layers (1, 2), and
at least one spacer element (3) which is arranged between the flexible, fluid-tight material layers and holds them at a spacing relative to each other, wherein the at least one spacer element is such that the space between the flexible, fluid-tight material layers (1, 2) is adapted at least region-wise for fluid to flow therethrough, and
wherein at an edge region of the multi-layer structure the separation element has a sensor region (S) which is in a communication through which fluid can flow with the remaining space between the flexible, fluid-tight material layers, **characterized in that**
the sensor region is such that upon an increase in the pressure by virtue of an inflow of fluid between the flexible, fluid-tight material layers (1, 2) of the separation element the flexible, fluid-tight material layers (1, 2) increase their spacing relative to each other in the portion of the sensor region (S).

2. A separation element as set forth in claim 1 wherein the two mutually superposed, flexible, fluid-tight material layers and the at least one spacer element (3), except in a portion of the sensor region (S), are fixedly joined together over the full surface area or in portion-wise manner, preferably by adhesive or welding.

3. A separation element as set forth in claim 1 wherein at least one of the two mutually superposed, flexible, fluid-tight material layers and the at least one spacer element (3), are made in one piece.

4. A separation element as set forth in one of claims 1 through 3 wherein the at least one spacer element (3) is in the form of a woven material, knitted material and/or fiber material through which fluid can flow.

5. A separation element as set forth in one of claims 1 through 3 wherein the at least one spacer element (3) is in the form of a film, preferably a PTFE film, which for a fluid through-flow capability is provided at least region-wise with slots (15), openings, embossings, raised portions (16), recesses and/or wave forms.

6. A separation element as set forth in one of claims 1 through 3 wherein the at least one spacer element (3) is in the form of raised portions, knobs (16) and/or recesses at one or both of the at least two mutually superposed flexible, fluid-tight material layers (1, 2).

7. A separation element as set forth in one of the preceding claims wherein the separation element at the edge region of the multi-layer structure has at least one clamping region (E) for fixing the separation element in a pressure compensation vessel, pressure reservoir or pulsation damper and for fluid-tight separation of a space (13), filled with a gas, of the pressure compensation vessel, pressure reservoir or pulsation damper, from a space (14) thereof, which is filled with gas or liquid.

8. A separation element as set forth in claim 7 wherein the sensor region (S) is arranged in the clamping region (E).

9. A separation element as set forth in one of the preceding claims wherein the separation element in a plan view from above is substantially in the form of a circular disk, wherein the sensor region (S) is arranged in the edge region of the circular disk or the sensor region (S) is arranged in a portion of the separation element, which extends outwardly from the edge region of the circular disk.

10. A separation element as set forth in one of claims 1 through 8 wherein the separation element is of a substantially cylindrical or hose-shaped configuration.

11. A separation element as set forth in one of claims 1 through 8 wherein the separation element is in the form of a bubble or a balloon having a through opening to the interior of the bubble or the balloon.

12. A separation element as set forth in one of the preceding claims wherein no spacer element (3) is provided in the sensor region (S) of the separation element between the at least two mutually superposed, flexible, fluid-tight material layers (1, 2).

13. A separation element as set forth in one of the preceding claims wherein at least one of the at least two mutually superposed, flexible, fluid-tight material layers (1, 2) is adapted to be more easily deformable under pressure in the sensor region (S) of the separation element than in the remaining regions of the separation element.

14. A separation element as set forth in claim 13 wherein at least one of the at least two mutually superposed, flexible, fluid-tight material layers (1, 2) is of a smaller material thickness for easier deformability under pressure in the sensor region (S) of the separation element than in the remaining regions of the separation element.

15. A separation element as set forth in one of claims 13 and 14 wherein at least one of the at least two mutually superposed, flexible, fluid-tight material layers (1, 2) is of a higher degree of elasticity for easier deformability under pressure in the sensor region (S) of the separation element than in the remaining regions of the separation element.

16. A separation element as set forth in one of the preceding claims wherein disposed at the sensor region (S) of the separation element is a sensor (10) which responds to a deformation of at least one of the at least two mutually superposed, flexible, fluid-tight material layers (1, 2) in the portion of the sensor region (S).

17. A separation element as set forth in one of the preceding claims wherein a stiffening element or support element (20) is additionally provided between the flexible, fluid-tight material layers (1, 2).

18. A pressure compensation vessel, pressure reservoir or pulsation damper having a separation element as set forth in one of the preceding claims for fluid-tight separation of a space (13) filled with a gas from a space (14) filled with gas or liquid of a pressure compensation vessel, pressure reservoir or pulsation damper, and a sensor (10) which is arranged at the sensor region (S) of the separation element and which responds to a deformation of at least one of the at least two mutually superposed, flexible, fluid-tight material layers (1, 2) in the portion of the sensor region (S).

## Revendications

1. Élément de séparation pour un récipient de compensation de pression, un accumulateur de pression ou un amortisseur de pulsations, l'élément de séparation possédant une structure multicouche comprenant au moins deux couches de matériau (1, 2) superposées, flexibles et étanches au fluide et
au moins un élément d'écartement (3), lequel est disposé entre les couches de matériau flexibles et étanches au fluide et les maintient à distance l'une de l'autre, le au moins un élément d'écartement étant conçu de sorte que l'espace entre les couches de matériau (1, 2) flexibles et étanches au fluide peut être traversé au moins par zones par un fluide, et l'élément de séparation comprenant sur une zone de bord de la structure multicouche une zone de capteur (S), qui est en liaison pouvant être traversée par un fluide avec l'espace résiduel entre les couches de matériau flexibles et étanches au fluide, **caractérisé en ce que**
la zone de capteur est conçue de sorte que lorsqu'un afflux de fluide fait augmenter la pression entre les couches de matériau (1, 2) flexibles et étanches au fluide de l'élément de séparation, la distance entre les couches de matériau (1, 2) flexibles et étanches au fluide augmente dans la section de la zone de capteur (S).

2. Élément de séparation selon la revendication 1, les au moins deux couches de matériau superposées, flexibles et étanches au fluide et le au moins un élément d'écartement (3) étant reliés fixement les uns aux autres sur toute la surface ou par sections, de préférence par collage ou soudage, sauf dans une section de la zone de capteur (S).

3. Élément de séparation selon la revendication 1, au moins une des au moins deux couches de matériau superposées, flexibles et étanches au fluide et le au moins un élément d'écartement (3) étant fabriqués de manière solidaire.

4. Élément de séparation selon l'une quelconque des revendications 1 à 3, le au moins un élément d'écartement (3) étant conçu comme un tissu, un tricot, et/ou un matériau fibreux pouvant être traversé par un fluide.

5. Élément de séparation selon l'une quelconque des revendications 1 à 3, le au moins un élément d'écartement (3) étant conçu comme un film, de préférence un film en PTFE, qui, pour pouvoir être traversé par un fluide, est pourvu au moins par zones de fentes (15), d'évidements, d'empreintes, d'élévations (16), de creux et/ou de formes ondulées.

6. Élément de séparation selon l'une quelconque des revendications 1 à 3, le au moins un élément d'écartement (3) étant conçu comme des élévations, des nodules (16) et/ou des creux sur une ou les deux des au moins deux couches de matériau (1, 2) superposées, flexibles et étanches au fluide.

7. Élément de séparation selon l'une quelconque des revendications précédentes, l'élément de séparation comprenant sur la zone de bord de la structure multicouche au moins une zone d'insertion (E) pour la fixation de l'élément de séparation dans un récipient de compensation de pression, un accumulateur de pression ou un amortisseur de pulsations et pour une séparation étanche au fluide d'un espace (13) rempli de gaz par rapport à un espace (14) rempli de gaz ou de liquide du récipient de compensation de pression, de l'accumulateur de pression ou de l'amortisseur de pulsations.

8. Élément de séparation selon la revendication 7, la zone de capteur (S) étant disposée dans la zone d'insertion (E).

9. Élément de séparation selon l'une quelconque des revendications précédentes, l'élément de séparation étant conçu en vue en élévation sensiblement en forme de disque circulaire, la zone de capteur (S) étant disposée dans la zone de bord du disque circulaire ou la zone de capteur (S) étant disposée dans une section de l'élément de séparation s'étendant vers l'extérieur depuis la zone de bord du disque circulaire.

10. Élément de séparation selon l'une quelconque des revendications 1 à 8, l'élément de séparation étant conçu sensiblement en forme de cylindre ou en forme de tuyau.

11. Élément de séparation selon l'une quelconque des revendications 1 à 8, l'élément de séparation étant conçu sous forme d'une bulle ou d'un ballon comprenant une ouverture de passage menant à l'intérieur de la bulle ou du ballon.

12. Élément de séparation selon l'une quelconque des revendications précédentes, aucun élément d'écartement (3) n'étant prévu dans la zone de capteur (S) de l'élément de séparation entre les au moins deux couches de matériau (1, 2) superposées, flexibles et étanches au fluide.

13. Élément de séparation selon l'une quelconque des revendications précédentes, au moins une des couches de matériau (1, 2) superposées, flexibles et étanches au fluide dans la zone de capteur (S) de l'élément de séparation étant conçue de manière à pouvoir être plus facilement déformée sous la pression que dans les autres zones de l'élément de séparation.

14. Élément de séparation selon la revendication 13, au moins une des au moins deux couches de matériau (1, 2) superposées, flexibles et étanches au fluide dans la zone de capteur (S) de l'élément de séparation, comprenant, pour être plus facilement déformée sous la pression, une épaisseur de matériau inférieure à celle présente dans les autres zones de l'élément de séparation.

15. Élément de séparation selon l'une quelconque des revendications 13 ou 14, au moins une des au moins deux couches de matériau (1, 2) superposées, flexibles et étanches au fluide dans la zone de capteur (S) de l'élément de séparation comprenant, pour être plus facilement déformée sous la pression, une élasticité supérieure à celle dans les autres zones de l'élément de séparation.

16. Élément de séparation selon l'une quelconque des revendications précédentes, un capteur (10) étant disposé sur la zone de capteur (S) de l'élément de séparation, lequel capteur est sensible à une déformation d'au moins une des au moins deux couches de matériau (1, 2) superposées, flexibles et étanches au fluide dans la section de la zone de capteur.

17. Élément de séparation selon l'une quelconque des revendications précédentes, un élément de renforcement ou élément d'appui (20) étant prévu en plus entre les couches de matériau (1, 2) flexibles et étanches au fluide.

18. Récipient de compensation de pression, accumulateur de pression ou amortisseur d'impulsions comprenant un élément de séparation selon l'une quelconque des revendications précédentes pour une séparation étanche au fluide d'un espace (13) rempli de gaz par rapport à un espace (14) rempli de gaz ou de liquide du récipient de compensation de pression, de l'accumulateur de pression ou de l'amortisseur de pression, et comprenant un capteur (10) disposé sur la zone de capteur (S) de l'élément de séparation, lequel capteur est sensible à une déformation d'au moins une des au moins deux couches de matériau (1, 2) superposées, flexibles et étanches au fluide dans la section de la zone de capteur (S).
